# EUROPÄISCHE PATENTSCHRIFT

(11) **EP 0 859 231 B1**
(45) Veröffentlichungstag und Bekanntmachung des Hinweises auf die Patenterteilung: **14.03.2007**
(21) Anmeldenummer: 97121890.4
(22) Anmeldetag: 12.12.1997
(51) Int. Cl.: G01N 27/407

(54) **Gasmessfühler**
Gassensor
Capteur de gaz

(30) Priorität: 14.02.1997 DE 19705623
(43) Veröffentlichungstag der Anmeldung: 19.08.1998
(73) Patentinhaber: ROBERT BOSCH GMBH, 70442 Stuttgart (DE)
(72) Erfinder: Weyl, Helmut, 71701 Schwieberdingen (DE); Nageldinger, Harry, 71634 Ludwigsburg (DE); Schaake, Henning, 71701 Schwieberdingen (DE)

(56) Entgegenhaltungen:
- EP-A- 0 132 691
- DE-A- 19 526 821
- DE-A- 19 611 572
- US-A- 5 329 806

## Beschreibung

### Stand der Technik

Die Erfindung geht aus von einem Meßfühler nach der Gattung des Anspruchs 1.

Aus der EP-A1 624 791 ist ein Gasmeßfühler bekannt, bei dem in einem Gehäuse Kontaktierelemente zur elektrischen Kontaktierung eines Sensorelements vorgesehen sind, die mit Steckkontakten einer elektrischen Steckkupplung in Verbindung stehen. Die Kontaktierelemente sind innerhalb des metallischen Gehäuses mittels elektrisch isolierender Keramik- und Glasteile arretiert. Eines der Glasteile umschließt als Glaseinschmelzung die Steckkontakte und bildet somit die mechanisch stabile Steckkupplung aus.

### Vorteile der Erfindung

Der erfindungsgemäße Meßfühler mit den kennzeichnenden Merkmalen des Anspruchs 1 ist konstruktiv einfach aufgebaut. Durch die Ausbildung des anschlußseitigen Gehäuses aus isolierendem Material können die Kontaktierelemente zur elektrischen Kontaktierung des Sensorelements ohne zusätzliche elektrische Isolierbauteile im Gehäuse eingesetzt werden. Dadurch verringert sich der Fertigungs- und Montageaufwand zur Herstellung des Gasmeßfühlers.

Durch die in den Unteransprüchen aufgeführten Maßnahmen sind vorteilhafte Weiterbildungen und Verbesserungen der Erfindung möglich. Besonders vorteilhaft ist die Ausbildung einer elektrischen Steckkupplung am anschlußseitigen Gehäuse. Dadurch ist eine kabelloser Einbau des Gasmeßfühlers in der Abgasanlage bei der Installation möglich. Eine fertigungs- und montagetechnisch günstige Herstellung ist durch die Teilung des anschlußseitigen Gehäuses in zwei Gehäuseteile möglich. Beim Einsatz des Gasmeßfühlers im Niedertemperaturbereich bietet sich die Verwendung von Kunststoff als Material für das anschlußseitige Gehäuseteil an. Es ist aber genauso denkbar, ein hochtemperaturbeständiges elektrisch isolierendes Material für das anschlußseitige Gehäuse zu verwenden, so daß der erfindungsgemäße Gasmeßfühler auch bei höheren Abgastemperaturen, wie sie beispielsweise in Abgasanlagen von Verbrennungsmotoren vorkommen, eingesetzt werden kann.

### Zeichnung

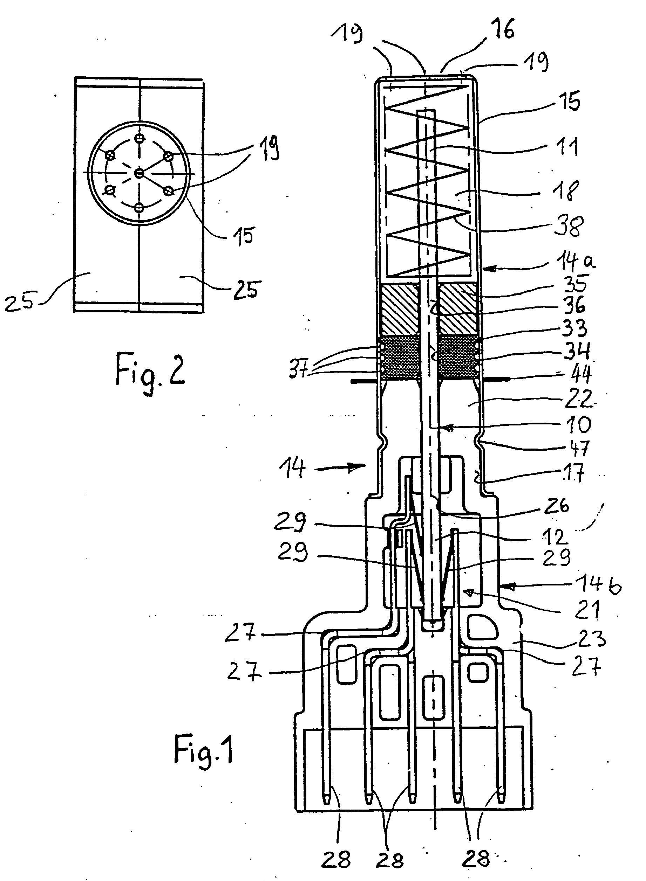

Ein Ausführungsbeispiel der Erfindung ist in der Zeichnung dargestellt und in der nachfolgenden Beschreibung näher erläutert. Es zeigen Figur 1 einen Schnitt durch einen erfindungsgemäßen Gasmeßfühler und Figur 2 eine meßgasseitige Ansicht des Gasmeßfühlers gemäß Figur 1.

### Ausführungsbeispiele

Der Gasmeßfühler gemäß Figur 1 ist ein elektrochemischer Sauerstoffsensor mit einem planaren Sensorelement 10, das in einem Gehäuse 14 fixiert ist. Das Sensorelement 10 besitzt einen meßgasseitigen Abschnitt 11 und einen anschlußseitigen Abschnitt 12. Das Gehäuse 14 besteht aus einem meßgasseitigen Gehäuse 14a und einem anschlußseitigen Gehäuse 14b. Das meßgasseitige Gehäuse 14a ist bei der Ausführungsform gemäß Figur 1 als ein einseitig geschlossenes Rohr 15 mit beispielsweise einem ebenen Boden 16 und am gegenüberliegenden Ende mit einer zylindrischen Öffnung 17 ausgeführt. Das meßgasseitigen Gehäuse 14a bildet mit dem geschlossenen Abschnitt des Rohres 15 einen Meßgasraum 18 aus, in den das Sensorelement 10 mit dem meßgasseitigen Abschnitt 11 hineinragt. Die Ausbildung des meßgasseitigen Gehäuse 14a als Rohr 15 ermöglicht außerdem, daß der geschlossene Abschnitt des Rohres 15 gleichzeitig als Schutzrohr für den meßgasseitigen Abschnitt 11 des Sensorelements 10 fungiert. Im Boden 16 des Rohres 15 sind dabei Gasöffnungen 19 eingebracht, durch die das Meßgas in den Meßgasraum 18 ein- und ausströmt (Figur 2). Es ist aber genauso denkbar, die Gasöffnungen 19 in der vom Meßgasraum 18 zugänglichen Mantelfläche des Rohres 15 anzuordnen.

Das anschlußseitige Gehäuse 14b ist mit einem Verschlußstück 22 und einem Kontaktierstück 23 ausgeführt und enthält Kontaktierelemente 21 zur elektrischen Kontaktierung des Sensorelements 10. Das anschlußseitige Gehäuse 14b besteht beispielsweise aus zwei Gehäuseteilen 25 (Figur 2) aus beispielsweise Kunststoff und ist beispielsweise in Spritzgußtechnik hergestellt. In den Gehäuseteilen 25 sind eine Aufnahme 26 für den anschlußseitigen Abschnitt 12 des Sensorelements 12 sowie weitere Aufnahmen 27 für die Kontaktierelemente 21 ausgebildet. Beim Einsatz des Gasmeßfühlers im Hochtemperaturbereich, wie beispielsweise in Abgasanlagen von Verbrennungsmotoren, sind entsprechnde hochtemperaturstabile Materialien für das anschlußseitige Gehäuse zu verwenden. Als derartige Materialien eignen sich beispielsweise elektrisch isolierende Keramiken, beispielsweise Al₂O₃.

Das Verschlußstück 22 des anschlußseitigen Gehäuses 14b ragt in die Öffnung 17 des Rohres 15 hinein und bildet ein Widerlager für den daran anschließenden Aufbau aus einem elastisch verformbaren Dichtelement 33 aus beispielsweise einem Elastomer, einem Druckstück 35 sowie einer Druckfeder 38. Das Druckstück 35 ist bei der Ausführungsform gemäß Figur 1 aus einer elektrisch isolierenden Keramik ausgeführt. Das Dichtelement 33 hat eine Durchführung 34 und das Druckstück 35 eine weitere Durchführung 36. Durch die Durchführungen 34, 36 wird das Sensorelement 10 geführt. Die Durchführung 34 des elastisch verformbaren Dichtelements 33 ist dabei so dimensioniert, daß der Querschnitt des Sensorelements 10 eng umschlossen ist. Das Dichtelement 33 hat zweckmäßigerweise an der Mantelfläche gemäß Figur 1 mehrere umlaufende Rillen 37, die die Abdichtung zum Rohr 15 hin begünstigen.

Das meßgasseitige Gehäuse 14a ist ferner mit einem Anschlag 44 zum Einsetzen des Gasmeßfühlers in ein nicht dargestelltes Abgasrohr ausgeführt. Bei der Ausführungsform gemäß Figur 1 wird der Anschlag 44 von einem Zackenring gebildet, der über das Rohr 15 geschoben und in der vorgesehenen Position arretiert ist.

Die Kontaktierelemente 21 sind Kontaktstifte 28 mit federnden Kontaktteilen 29. Die federnden Kontaktteilen 29 sind beispielsweise mit den Kontaktstiften 28 verschweißt. Die federnden Enden der Kontaktteile 29 drücken gegen am anschlußseitigen Abschnitt 12 des Sensorelements 10 ausgebildete, nicht dargestellte Kontaktierstellen. Über die Kontaktierstellen werden die elektrischen Verbindungen zu den nicht dargestellten, im meßgasseitigen Abschnitt 11 untergebrachten Elektroden sowie zu dem im Sensorelement 10 integrierten Heizer hergestellt. Die Kontaktstifte 28 bilden am äußeren Ende Steckkontakte für eine elektrische Steckkupplung aus. Über das nichtdargestellte Gegenstück der Steckkupplung wird der Gasmeßfühler elektrisch mit einem ebenfalls nicht dargestellten Meß- oder Steuergerät verbunden.

Zur Montage des Gasmeßfühlers wird zunächst die Druckfeder 38 in dem Rohr 15 positioniert. Das Sensorelement 10 wird in das anschlußseitige Gehäuse 14b eingesetzt, wobei der anschlußseitige Abschnitt 12 des Sensorelements 10 von der Aufnahme 26 aufgenommen wird. Auf den aus dem anschlußseitige Gehäuse 14b herausragenden Abschnitt des Sensorelements 10 werden nacheinander das Dichtelement 33 und das Druckstück 35 geschoben, wobei das Sensorelemnet 10 durch die Durchführungen 34, 36 gesteckt wird. Anschließend wird das anschlußseitige Gehäuse 14b mit dem meßgasseitigen Gehäuse 14a verbunden. Dazu wird das Verschlußstück 22 des anschlußseitigen Gehäuses 14b bis zum Anschlag in die Öffnung 17 des Rohres 15 eingeführt. Dabei wird das Druckstück 35 gegen die Druckfeder 38 gedrückt und das Dichtelement 33 elastisch verformt. Durch die Verformung weitet sich das Dichtelement 33 in radialer Richtung aus und legt sich gasdicht an die Innenwand des Rohres 15 sowie an das Sensorelement 10 an. In dieser Lage wird sodann das Rohr 15 am Verschlußstück 22 mit mindestens einer umlaufenden Sicke 47 verstemmt.

## Patentansprüche

1. Meßfühler zur Bestimmung von Gasbestandteilen in Gasgemischen mit einem in einem Gehäuse (14) angeordneten Sensorelement (10), wobei das Gehäuse ein meßgasseitiges Gehäuse (14a) und ein anschlußseitiges Gehäuse (14b) aufweist und wobei das Sensorelement (10) innerhalb des anschlußseitigen Gehäuses (14b) mittels Kontaktierelementen (21) elektrisch kontaktiert ist, **dadurch gekennzeichnet, daß** das anschlußseitige Gehäuse (14b) aus einem elektrisch isolierenden Material ausgeführt ist.

2. Meßfühler nach Anspruch 1, **dadurch gekennzeichnet, daß** die Kontaktierelemente (21) im anschlußseitigen Gehäuse (14b) ohne weitere elektrisch isolierende Mittel angeordnet sind.

3. Meßfühler nach Anspruch 1 oder 2, **dadurch gekennzeichnet, daß** im anschlußseitigen Gehäuse (14b) Aufnahmen (26) ausgebildet sind, in die die Kontaktierelemente (21) eingesetzt sind.

4. Meßfühler nach Anspruch 2 oder 3, **dadurch gekennzeichnet, daß** die Kontaktierelemente (21) mit Steckkontakten (28) für eine elektrische Steckkupplung ausgeführt sind.

5. Meßfühler nach Anspruch 2, 3 oder 4, **dadurch gekennzeichnet, daß** die Kontaktierelemente (21) mit federnden Kontaktteilen (29) ausgeführt sind, die am Sensorelement (10) vorgesehene Kontaktstellen kontaktieren.

6. Meßfühler nach Anspruch 4 **dadurch gekennzeichnet, daß** die meßfühlerseitige Steckkupplung an das anschlußseitige Gehäuse (14b) angeformt ist.

7. Meßfühler nach Anspruch 1, **dadurch gekennzeichnet, daß** das meßgasseitige Gehäuse (14a) am anschlußseitigen Ende eine Öffnung (17) aufweist und daß am anschlußseitigen Gehäuse (14b) ein Abschnitt (22) ausgebildet ist, welcher in die Öffnung (17) eingreift und vom meßgasseitigen Gehäuse (14a) umfaßt ist.

8. Meßfühler nach Anspruch 1, **dadurch gekennzeichnet, daß** das anschlußseitige Gehäuse (14b) aus mindestens zwei Gehäuseteilen (25) besteht.

9. Meßfühler nach Anspruch 1, **dadurch gekennzeichnet, daß** das anschlußseitige Gehäuse (14b) aus Kunststoff besteht.

## Claims

1. Measuring sensor for determining gas constituents in gas mixtures, said sensor having a sensor element (10) which is arranged in a housing (14), the housing having a housing (14a) on the measurement gas side and a housing (14b) on the connection side, and electrical contact being made with the sensor element (10) inside the housing (14b) on the connection side by means of contact-making elements (21), **characterized in that** the housing (14b) on the connection side is constructed from an electrically insulating material.

2. Measuring sensor according to Claim 1,
**characterized in that** the contact-making elements (21) are arranged in the housing (14b) on the connection side without further electrically insulating means.

3. Measuring sensor according to Claim 1 or 2,
**characterized in that** holders (26) are formed in the housing (14b) on the connection side, the contact-making elements (21) being inserted into said holders.

4. Measuring sensor according to Claim 2 or 3,
**characterized in that** the contact-making elements (21) are constructed with plug-in contacts (28) for an electrical plug-in coupling.

5. Measuring sensor according to Claim 2, 3 or 4, **characterized in that** the contact-making elements (21) are constructed with resilient contact parts (29) which make contact with contact locations provided on the sensor element (10).

6. Measuring sensor according to Claim 4,
**characterized in that** the plug-in coupling on the measuring sensor side is integrally moulded to the housing (14b) on the connection side.

7. Measuring sensor according to Claim 1,
**characterized in that** the housing (14a) on the measurement gas side has an opening (17) at the end on the connection side, and **in that** a section (22) which engages in the opening (17) and is surrounded by the housing (14a) on the measurement gas side is formed on the housing (14b) on the connection side.

8. Measuring sensor according to Claim 1,
**characterized in that** the housing (14b) on the connection side comprises at least two housing parts (25).

9. Measuring sensor according to Claim 1,
**characterized in that** the housing (14b) on the connection side comprises plastic.

## Revendications

1. Capteur de mesure pour la détermination de composants gazeux dans des mélanges gazeux, comprenant un élément de détection (10) dans un boîtier (14) composé d'un boîtier côté gaz de mesure (14a) et d'un boîtier côté raccordement (14b), l'élément de détection (10) étant en contact électrique à l'intérieur du boîtier côté raccordement (14b) au moyen d'éléments de contact (21),
**caractérisé en ce que**
le boîtier côté raccordement (14b) est en un matériau électriquement isolant.

2. Capteur de mesure selon la revendication 1,
**caractérisé en ce que**
les éléments de contact (21) sont disposés dans le boîtier côté raccordement (14b) sans autre moyen électriquement isolant.

3. Capteur de mesure selon la revendication 1 ou 2,
**caractérisé en ce que**
le boîtier côté raccordement (14b) comporte des logements (26) qui intègrent les éléments de contact (21).

4. Capteur de mesure selon la revendication 2 ou 3,
**caractérisé en ce que**
les éléments de contact (21) sont réalisés avec des contacts à fiche (28) pour un accouplement électrique à fiches.

5. Capteur de mesure selon la revendication 2, 3 ou 4,
**caractérisé en ce que**
les éléments de contact (21) sont réalisés avec des parties de contact élastiques (29) qui entrent en contact avec des points de contact prévus au niveau de l'élément de détection (10).

6. Capteur de mesure selon la revendication 4,
**caractérisé en ce que**
l'accouplement à fiches côté capteur de mesure est formé sur le boîtier côté raccordement (14b).

7. Capteur de mesure selon la revendication 1,
**caractérisé en ce que**
le boîtier côté gaz de mesure (14a) présente une ouverture (17) au niveau de son extrémité côté raccordement, et le boîtier côté raccordement (14b) comporte un segment (22) qui s'engage dans l'ouverture (17) et est entouré par le boîtier côté gaz de mesure (14a).

8. Capteur de mesure selon la revendication 1,
**caractérisé en ce que**
le boîtier côté raccordement (14b) se compose d'au moins deux parties de boîtier (25).

9. Capteur de mesure selon la revendication 1,
**caractérisé en ce que**
le boîtier côté raccordement (14b) est en matière plastique.
